# EUROPÄISCHE PATENTSCHRIFT

(11) **EP 0 431 263 B1**
(45) Veröffentlichungstag und Bekanntmachung des Hinweises auf die Patenterteilung: **30.03.1994**
(21) Anmeldenummer: 90116210.7
(22) Anmeldetag: 24.08.1990
(51) Int. Cl.: F16J 15/32

(54) **Kassettendichtung**
Seal unit
Cartouche d'étanchéité

(30) Priorität: 02.12.1989 DE 3940003
(43) Veröffentlichungstag der Anmeldung: 12.06.1991
(73) Patentinhaber: Firma Carl Freudenberg, 69469 Weinheim (DE)
(72) Erfinder: Seeh, Reinhold, D-6940 Weinheim (DE); Vogt, Rolf, D-6836 Oftersheim (DE); Drucktenhengst, Rolf, D-6840 Lampertheim-Hofheim (DE)

(56) Entgegenhaltungen:
- EP-A- 0 208 880
- EP-A- 0 337 893
- DE-A- 3 031 870

## Beschreibung

Die Erfindung betrifft eine Kassettendichtung, umfassend einen Außenring mit einer axial nach außen in ihrem Querschnitt erweiterten, ringförmigen Ausnehmung, die außenseitig durch eine sich achsparallel erstreckende Gegenfläche und innenseitig durch eine schräg angeordnete Gegenfläche begrenzt ist, eine an den Außenring anvulkanisierte Hauptdichtung, die einen Innenring dichtend berührt, wobei der Innenring mit einem die Ausnehmung im Bereich ihrer Mündung zumindest teilweise radial übergreifenden Ringvorsprung versehen ist und wobei eine axial in die Ausnehmung eingreifende Vorschaltdichtung an den Ringvorsprung anvulkanisiert ist.

Eine solche Kassettendichtung ist aus der EP-A 0 337 893 bekannt. Sie dient zur Abdichtung von Wälzlagern, wobei der Außenring in der Bohrung eines Gehäuses und der Innenring auf einer Welle angeordnet ist. Der Außenring und das Gehäuse sowie der Innenring und die Welle sind einander jeweils relativ unbeweglich zugeordnet. Die Relativbewegung erfolgt innerhalb der Kassettendichtung, wobei der Innenring relativ zum Außenring verdrehbar ist. Der Innenring ist mit zwei sich entlang seines Außenumfangs erstreckenden Dichtlippen versehen, die sich beide elastisch nachgiebig auf der Gegenfläche des Außenrings abstützen, die sich achsparallel erstreckt.

Der Erfindung liegt die Aufgabe zugrunde, eine solche Kassettendichtung derart weiterzuentwickeln, daß die Größe der elastischen Anpressung der beiden Dichtkanten an die ihnen zugeordneten Gegenflächen auf elastischen Verformungskräften beruht, die sich während des Einfügens des Innenrings in den Außenring ergeben und daß bei einer radialgerichteten Relativverlagerung des Innenrings in bezug auf den Außenring das Abdichtungsergebnis keine Beeinträchtigung erfährt.

Diese Aufgabe wird erfindungsgemäß bei einer Kassettendichtung der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Kassettendichtung ist es vorgesehen, daß eine erste Dichtlippe der Vorschaltdichtung die schräg angeordnete Gegenfläche mit einer Dichtkante und eine zweite Dichtlippe der Vorschaltdichtung die achsparallele Gegenfläche mit einer Dichtkante berühren und daß die zweite Dichtlippe durch einen sich in entgegen der Axialrichtung der ersten Dichtlippe erstreckenden, einstückig angeformten Ansatz des in die Ausnehmung eingreifenden, vorderen Endes der ersten Dichtlippe gebildet ist. In bezug auf von der Außenseite her eindringendes Wasser sind die erste und die zweite Dichtlippe einander in einer Reihenschaltung zugeordnet, wobei jede der beiden Dichtlippen die ihr zugeordnete Gegenfläche im wesentlichen nur im Bereich einer linienförmig ausgebildeten Kontaktfläche berührt. Im Bereich dieser Kontaktfläche ergibt sich eine vergleichsweise große spezifische Flächenpressung, was das erzielte Abdichtungsergebnis naturgemäß verbessert. Darüber hinaus ist es bei der erfindungsgemäßen Kassettendichtung vorgesehen, daß die zweite Dichtlippe durch einen Ansatz des vorspringenden Endes der ersten Dichtlippe gebildet ist, der den Außenring mit seiner Dichtkante in einem Bereich berührt, der etwa in der selben Radialebene liegt wie die Dichtkante der ersten Dichtlippe. Die elastische Anpressung der beiden Dichtkanten an die ihnen zugeordneten Gegenflächen beruht dadurch maßgeblich auf den elastischen Verformungskräften, die sich während des Einfügens des Innenringes in den Außenring im Bereich der zweiten Dichtlippe ergeben. Sie ist durch die gegenseitige Unterstützung von weitgehend übereinstimmender Größe und die Verformungskräfte unterliegen bei einer radial gerichteten Relativverlagerung des Innenringes in bezug auf den Außenring keinerlei Veränderung, wodurch das Abdichtungsergebnis auch in einem solchen Falle keine Beeinträchtigung erfährt. Auch axiale Relativverlagerungen des Innenringes in bezug auf den Außenring können problemlos in Kauf genommen werden, wenn der Öffnungswinkel der Ausnehmung gering ist.

Der zweiten Dichtlippe kann in Richtung der Außenseite ein Dichtspalt vorgeschaltet sein, der einerseits durch den Ringvorsprung und andererseits durch den Außenring begrenzt ist. Die Gefahr der unmittelbaren Beaufschlagung der Vorschaltdichtung mit Sand und Schlamm wird hierdurch reduziert.

Im Hinblick auf eine Reduzierung des sich im Bereich des Dichtspaltes ergebenden Verschleißes hat es sich als vorteilhaft bewährt, wenn dieser auf wenigstens einer Seite durch eine Gummischicht begrenzt ist. Die Ablösung von verkrusteten Anbackungen öliger Bestandteile wird hierdurch bei erneuter Inbetriebnahme begünstigt.

Der Dichtspalt kann zwischen der Außenseite und der zweiten Dichtlippe an wenigstens einer Stelle mit einer Richtungsänderung versehen sein, zweckmäßig einer solchen von 75 bis 90°. Dem Eindringen von aus dem Bereich der Außenseite stammenden Feststoffen in das Innere der Kassettendichtung wird hierdurch in gewissem Maße vorgebeugt.

Der Dichtspalt kann an seinem der Außenseite zugewandten Ende radial innen- und außenseitig durch sich im wesentlichen in einer übereinstimmenden Radialebene angeordnete und sich im wesentlichen in radialer Richtung erstreckende Stirnflächen begrenzt sein. Die in Richtung der Außenseite wirksame, schmutzabweisende Wirkung des Dichtspaltes wird hierdurch zusätzlich verbessert.

Die erste Dichtlippe kann mittels einer Ringwendelfeder an die ihr zugeordnete Gegenfläche angepreßt sein. Die Ringwendelfeder kann aus einem metallischen Werkstoff bestehen und gewährleistet dann eine ausgeglichene Anpreßkraft über sehr lange Zeiträume. Auch Relaxationserscheinungen des die Dichtlippen bildenden, gummielastischen Werkstoffes führen daher nicht mehr zu einer Beeinträchtigung des erzielten Abdichtungsergebnisses.

Die Dichtkanten können durch konvergierende Begrenzungsflächen der Dichtlippen gebildet sein, wobei die innerhalb der Reihenschaltung in Richtung der Außenseite wirksamen d.h. weisenden Begrenzungsflächen mit den zugehörigen Gegenflächen der Dichtkanten einen steileren Winkel A einschließen als die damit konvergierenden Begrenzungsflächen. Hieraus resultiert eine gewisse Förderwirkung in Richtung der Außenseite, was nicht nur das Eindringen von Wasser oder Schmutz in das Innere der Kassettendichtung verhindert, sondern darüber hinaus die Zuführung von Schmierstoff aus dem Innenraum des Radlagers in den Bereich der ersten und der zweiten Dichtlippe begünstigt. Für die Erzielung einer verbesserten Gebrauchsdauer ist das von Vorteil.

Der Gegenstand der Erfindung wird nachfolgend anhand der in der Anlage beigefügten Zeichnung weiter verdeutlicht.

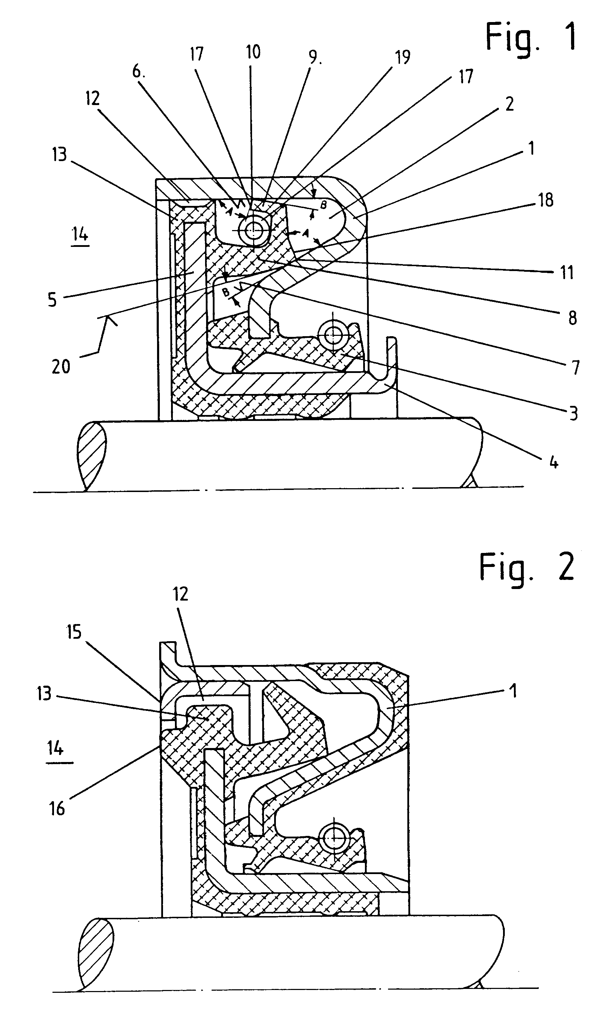

Es zeigen jeweils in halbgeschnittener Darstellung:
Figur 1
   Eine Kassettendichtung, bei der die erste Dichtlippe mittels einer Ringwendelfeder an die ihr zugeordnete Gegenfläche angepreßt ist.
Figur 2
   Eine Ausführung ähnlich der in Figur 1 gezeigten, bei der der zwischen der Vorschaltdichtung und der Außenseite vorgesehene Dichtspalt hinsichtlich seiner Durchflußrichtung doppelt umgelenkt ist.

Die in Figur 1 gezeigte Kassettendichtung besteht aus einem Außenring 1 und einem Innenring 4 aus tiefgezogenem Stahlblech. Diese sind durch einen umgebördelten Ringvorsprung des Innenringes unverlierbar aneinander festgelegt.

Der Außenring 1 ist mit einer axial in Richtung der Außenseite 14 geöffneten, ringförmigen Ausnehmung 2 versehen, die außenseitig durch eine sich axparallel erstreckende Gegenfläche 6 und innenseitig durch eine Gegenfläche 7 begrenzt ist, die mit der Rotationsachse einen spitzen Winkel von 20° einschließt. Der in radialer Richtung nach innen vorspringende Schenkel des Profils des Außenringes 1 bildet zugleich einen Träger für die Hauptdichtung 3. Diese ist nach Art der Dichtlippe eines üblichen Radialwellendichtringes ausgebildet und mit einer Dichtkante versehen, die durch eine Ringwendelfeder aus elastischem Werkstoff an den sich axparallel erstreckenden Schenkel des Profils des Innenringes 4 angepreßt ist.

Der Innenring 4 ist mit einem Ringvorsprung 5 versehen, der die Mündung der Öffnung 2 in axialer Richtung annähernd überdeckt. Der Ringvorsprung 5 dient zugleich als Träger für die erste Dichtlippe 8. Diese ist unmittelbar an den Ringvorsprung 5 anvulkanisiert und besteht aus gummielastischem Werkstoff. Sie berührt die Ausnehmung 2 im Bereich der diese innenseitig begrenzenden Kegelfläche 7 mit einer Dichtkante 11, die durch zwei konvergierende Begrenzungsflächen 18, 20 gebildet ist. Die Dichtkante wird durch eine Ringwendelfeder 17 aus metallischem Werkstoff an die ihr zugeordnete Gegenfläche 7 angepreßt.

Die erste Dichtlippe 8 ist an dem in die Ausnehmung 2 eintauchenden Ende mit einem einstückig angeformten, ringförmigen Ansatz versehen, der die zweite Dichtlippe 9 bildet. Diese berührt die ihr zugeordnete Gegenfläche 6 mit einer Dichtkante 10, welche im Sinne der vorstehenden Darlegungen durch zwei konvergierende Begrenzungsflächen 17, 19 gebildet ist.

Die einander im Bereich der Dichtkanten 10 bzw. 11 schneidenden Begrenzungsflächen 17, 19 bzw. 18, 20 sind einander und den jeweiligen Gegenflächen 6, 7 derart zugeordnet, daß aus dem Bereich der Außenseite 14 eindringende Flüssigkeit jeweils auf eine Begrenzungsfläche 17 bzw. 18 auftrifft, die mit der zugehörigen Gegenfläche einen größeren Winkel A einschließt als die zugehörige, konvergierende Begrenzungsfläche 19 bzw. 20. Hierdurch wird eine gewisse Förderwirkung in Richtung der Außenseite 14 erreicht, was nicht nur das Eindringen von Wasser aus dem Bereich der Umgebung in das Innere der Kassettendichtung verhindert sondern zusätzlich die Zuführung von Schmierstoff aus dem Inneren des abgedichteten Radlagers zu den dynamischen Abdichtungszonen der ersten und der zweiten Dichtlippe 8, 9 begünstigt. Der vergleichsweise kleinere Winkel, den die konvergierenden Flächen 19 bzw. 20 mit den ihnen zugeordneten Gegenflächen 7 bzw. 6 einschließen, ist mit B bezeichnet.

Bei dem in Figur 1 gezeigten Ausführungsbeispiel ist der die erste und die zweite Dichtlippe 8, 9 umfassenden Vorschaltdichtung in Richtung der Außenseite ein Dichtspalt 12 vorgelagert, der innenseitig durch eine Gummibeschichtung 13 des Ringvorsprunges 5 des Innenringes 4 begrenzt ist und außenseitig durch den aus Tiefziehblech bestehenden Außenring 1. Die Gummischicht 13 ist im Bereich der axialen Enden des Dichtspaltes 12 zu radial nach außen vorstehenden Dichtlippen verlängert, welche den Außenring 1 dichtend anliegend berühren. Eine Beaufschlagung der Vorschaltdichtung durch der Außenseite 14 entstammenden Partikel wird hierdurch verhindert.

Die in Figur 2 gezeigte Ausführung ist der vorstehend beschriebenen grundsätzlich ähnlich. Abweichend ist jedoch die Dichtkante der ersten Dichtlippe 8 nicht durch eine Ringwendelfeder an die ihr zugeordnete Gegenfläche angepreßt, sondern im wesentlichen durch die sich während des Einbaus ergebende, radiale Aufweitung ihres Durchmessers und die elastische Verformung der zweiten Dichtlippe 9. Beide berühren die ihnen zugeordneten Gegenflächen im Sinne der vorstehenden Darlegungen mit einer Dichtkante. Der Vorschaltdichtung ist außerdem eine Spaltdichtung 12 vorgelagert, die innenseitig durch eine Gummibeschichtung 13 des Ringvorsprunges 5 des Innenringes begrenzt ist und außenseitig durch einen Bestandteil eines Winkelringes aus Metall. Dieser ist formschlüssig in den Außenring 1 eingepreßt. Er wird in Richtung der Außenseite durch eine Radialfläche begrenzt, die sich übereinstimmend mit der Radialfläche 16 in der selben Radialebene befindet.

Der Dichtspalt 12 ist zwischen der Außenseite 14 und der Vorschaltdichtung zweimal mit einer Richtungsänderung von 90° versehen. Das Eindringen von Staub und Schmutz in das Innere der Kassettendichtung wird hierdurch verhindert.

## Patentansprüche

1. Kassettendichtung, umfassend eine Außenring (1) mit einer axial nach außen in ihrem Querschnitt erweiterten, ringförmigen Ausnehmung (2) die außenseitig durch eine sich achsparallel ersteckende Gegenfläche (6) und innenseitig durch eine schräg angeordnete Gegenfläche (7) begrenzt ist, eine an den Außenring (1) anvulkanisierte Hauptdichtung (3), die einen Innenring (4) dichtend berührt, wobei der Innenring (4) mit einem die Ausnehmung (2) im Bereich ihrer Mündung zumindest teilweise radial übergreifenden Ringvorsprung (5) versehen ist und wobei eine axial in die Ausnehmung (2) eingreifende Vorschaltdichtung (8, 9) an den Ringvorsprung (5) anvulkanisiert ist, dadurch gekennzeichnet, daß eine erste Dichtlippe (8) der Vorschaltdichtung (8, 9) die schräg angeordnete Gegenfläche (7) mit einer Dichtkante (11) und eine zweite Dichtlippe (9) der Vorschaltdichtung (8, 9) die achsparallele Gegenfläche (6) mit einer Dichtkante (10) berühren und daß die zweite Dichtlippe (9) durch einen sich entgegen der Axialrichtung der ersten Dichtlippe (8) erstreckenden, einstückig angeformten Ansatz des in die Ausnehmung (2) eingreifenden, vorderen Endes der ersten Dichtlippe (8) gebildet ist.

2. Kassettendichtung nach Anspruch 1, dadurch gekennzeichnet, daß der zweiten Dichtlippe (9) ein Dichtspalt (12) in Richtung der Außenseite (14) vorgeschaltet ist und daß der Dichtspalt (12) einerseits durch den Ringvorsprung (5) und andererseits durch den Außenring (1) begrenzt ist.

3. Kassettendichtung nach Anspruch 2, dadurch gekennzeichnet, daß der Dichtspalt (12) auf wenigstens einer Seite durch eine Gummischicht (13) begrenzt ist.

4. Kassettendichtung nach Anspruch 2 bis 3, dadurch gekennzeichnet, daß der Dichtspalt (12) zwischen der Außenseite (14) und der zweiten Dichtlippe (9) an wenigstens einer Stelle mit einer Richtungsänderung versehen ist.

5. Kassettendichtung nach Anspruch 4, dadurch gekennzeichnet, daß eine Richtungsänderung um 75 bis 90 ° vorgesehen ist.

6. Kassettendichtung nach Anspruch 1 bis 5, dadurch gekennzeichnet, daß der Dichtspalt (12) an dem der Außenseite (14) zugewandten Ende radial innen- und außenseitig durch sich im wesentlichen in einer übereinstimmende Radialebene angeordnete, sich in radialer Richtung erstreckende Stirnflächen (15, 16) begrenzt ist.

7. Kassettendichtung nach Anspruch 1 bis 6, dadurch gekennzeichnet, daß die erste Dichtlippe (8) durch eine Ringwendelfeder (17) an die zugehörige Gegenfläche (7) angepreßt ist.

8. Kassettendichtung nach Anspruch 1 bis 7, dadurch gekennzeichnet, daß die Dichtkanten (10, 11) durch konvergierende Begrenzungsflächen der ersten und der zweiten Dichtlippe gebildet sind und daß die in Richtung der Außenseite (14) hintereinander geschalteten Begrenzungsflächen (17, 18) mit den Gegenflächen (6, 7) einen steileren Winkel A einschließen als die damit konvergierenden Begrenzungsflächen (19, 20).

## Claims

1. A cartridge zeal, comprising an outer ring (1) with an annular recess (2) which is widened in its cross-section axially towards the outside and is bounded on the outside by a counter-surface (6) extending axially parallel and on the inside by an obliquely arranged counter-surface (7), and comprising a main seal (3) which is vulcanized onto the outer ring (1) and touches an inner ring (4) in a sealing manner, said inner ring (4) being provided with an annular projection (5) which engages at least partially radially over the recess (2) in the region of its opening, and a preceding seal (8, 9) engaging axially in the recess (2) being vulcanized onto the annular projection (5), characterized in that a first sealing lip (8) of the preceding seal (8, 9) touches the obliquely arranged counter-surface (7) with a sealing edge (11) and a second sealing lip (9) of the preceding seal (8, 9) touches the axially parallel counter-surface (6) with a sealing edge (10), and in that the second sealing lip (9) is formed by a shoulder of the front end of the first sealing lip (8) engaging in the recess (2), said shoulder extending counter to the axial direction of the first sealing lip (8) and being moulded on integrally.

2. A cartridge seal according to claim 1, characterized in that a sealing gap (12) is connected upstream of the second sealing lip (9) in the direction of the outside (14), and in that the sealing gap (12) is bounded on one side by the annular projection (5) and on the other side by the outer ring (1).

3. A cartridge seal according to claim 2, characterized in that the sealing gap (12) is bounded on at least one side by a rubber layer (13).

4. A cartridge seal according to either of claims 2 and 3, characterized in that the sealing gap (12) is provided with a change in direction at least at one place between the outside (14) and the second sealing lip (9).

5. A cartridge seal according to claim 4, characterized in that a change in direction by 75 to 90° is provided.

6. A cartridge seal according to any of claims 1 to 5, characterized in that the sealing gap (12) is bounded at the end facing the outside (14) radially on the inside and outside by end faces (15, 16) which are arranged substantially in a corresponding radial plane and extend in the radial direction.

7. A cartridge seal according to any of claims 1 to 6, characterized in that the first sealing lip (8) is pressed against the associated counter-surface (7) by an annular helical spring (17).

8. A cartridge seal according to any of claims 1 to 7, characterized in that the sealing edges (10, 11) are formed by converging boundary surfaces of the first and second sealing lips, and in that the boundary surfaces (17, 18) disposed one after the other in the direction of the outside (14) enclose a steeper angle A with the counter-surfaces (6, 7) than the boundary surfaces (19, 20) converging therewith.

## Revendications

1. Cartouche d'étanchéité, comportant une bague extérieure (1) pourvue d'un évidement (2) de forme annulaire, dont la section s'élargit axialement vers l'extérieur et qui est délimité du côté extérieur par une contre-surface (6) s'étendant parallèlement à l'axe et du côté intérieur par une contre-surface (7 ) disposée en oblique, un joint d'étanchéité principal (3) fixé par vulcanisation sur la bague extérieure (1) et qui est en contact étanche avec une bague intérieure (4), cette bague intérieure (4) étant pourvue d'une saillie annulaire (5) recouvrant radialement au moins en partie l'évidement (2) dans la zone de son embouchure, et un joint d'étanchéité frontal (8, 9), s'engageant axialement dans l'évidement (2), étant fixé par vulcanisation sur la saillie annulaire (5), caractérisée en ce qu'une première lèvre d'étanchéité (8) du joint frontal (8, 9) est en contact par un bord d'étanchéité (11) avec la contre-surface (7) disposée en oblique et qu'une seconde lèvre d'étanchéité (9) du joint frontal (8, 9) est en contact par un bord d'étanchéité (10) avec la contre-surface (6) parallèle à l'axe et en ce que la seconde lèvre d'étanchéité (9) est formée par un appendice de l'extrémité avant, s'engageant dans l'évidement (2), de la première lèvre d'étanchéité (8), cet appendice étant formé unitairement et étant orienté à l'opposé de la direction axiale de la première lèvre d'étanchéité (8).

2. Cartouche d'étanchéité selon la revendication 1, caractérisée en ce qu'il est prévu, en avant de la seconde lèvre d'étanchéité (9) et en direction du côté extérieur (14), un intervalle d'étanchéité (12) et en ce que cet intervalle d'étanchéité (12) est délimité d'un côté par la saillie annulaire (5) et de l'autre côté par la bague extérieure (1).

3. Cartouche d'étanchéité selon la revendication 2, caractérisée en ce que l'intervalle d'étanchéité (12) est délimité au moins d'un côté par une couche de caoutchouc (13).

4. Cartouche d'étanchéité selon une des revendications 2 et 3, caractérisée en ce que l'intervalle d'étanchéité (12) est soumis à une modification d'orientation entre le côté extérieur (14) et la seconde lèvre d'étanchéité (9) et en au moins un endroit.

5. Cartouche d'étanchéité selon la revendication 4, caractérisée en ce qu'il est prévu une modification d'orientation de 75 à 90°.

6. Cartouche d'étanchéité selon une des revendications 1 à 5, caractérisée en ce que l'intervalle d'étanchéité (12) est délimité, à l'extrémité dirigée vers le côté extérieur (14) et radialement du côté intérieur et du côté extérieur, par des surfaces frontales (15, 16) s'étendant dans une direction radiale et situées dans l'essentiel dans un plan radial commun.

7. Cartouche d'étanchéité selon une des revendications 1 à 6, caractérisée en ce que la première lèvre d'étanchéité (8) est appliquée sur la contre-surface (7) associée par un ressort spiral annulaire (17).

8. Cartouche d'étanchéité selon une des revendications 1 à 7, caractérisée en ce que les bords d'étanchéité (10, 11) sont créés par des surfaces convergentes de délimitation de la première et de la seconde lèvre d'étanchéité et en ce que les surfaces de délimitation (17, 18), disposées l'une après l'autre en direction du côté extérieur (14), font avec les contre-surfaces (6, 7) un angle A plus grand que les surfaces convergentes de délimitation (19, 20).
